# EUROPÄISCHE PATENTANMELDUNG

(11) **EP 1 992 213 A1**
(43) Veröffentlichungstag der Anmeldung: **19.11.2008**
(21) Anmeldenummer: 08101673.5
(22) Anmeldetag: 15.02.2008
(51) Int. Cl.: A01D 41/12, A01D 43/08

(54) **Landwirtschaftliche Arbeitsmaschine**

(30) Priorität: 14.05.2007 DE 102007022899
(71) Anmelder: CLAAS Selbstfahrende Erntemaschinen GmbH, 33428 Harsewinkel (DE)
(72) Erfinder: Jeppe, Eckehard, 34289, Zierenberg (DE); Laing, Reinhard, 33428, Harsewinkel (DE)

(57) **Zusammenfassung**

Die Erfindung betrifft eine landwirtschaftliche Arbeits- oder Erntemaschine (2) mit wenigstens einem Arbeitsaggregat (3,17,18) und einer Fahrerkabine (19), in der über einer in zumindest einer Anzeigeeinheit (23) dargestellten elektronischen Basisanzeigefläche (24), mehrere in unterschiedlichen Funktionsfenstern (25,26,27,28) angelegte Maschinen- und/oder Erntegutparameter visualisiert werden, wobei die Aktivierung und die Ansteuerung der in den Funktionsfenster (25,26,27,28) angelegten Maschinen- und/oder Erntegutparameter mittels einer Bedienvorrichtung (29,30) erfolgt und wobei zumindest im Arbeitsbetrieb auf der Anzeigeeinheit (23) wenigstens eine die Basisanzeigefläche (26) überlagernde Funktionsfenster (31) aufweisende Zusatzanzeigefläche (32) anzeigbar ist, wobei das wenigstens eine Funktionsfenster (31) der Zusatzanzeigefläche (32) mittels wenigstens einer separaten Bedienvorrichtung (33,34) ansteuerbar und aktivierbar ist.

## Beschreibung

Die Erfindung betrifft eine landwirtschaftliche Arbeitsmaschine mit einer elektronische Anzeigeeinheit gemäß dem Oberbegriff des Patentanspruchs 1.

In der DE 198 05 133 A1 wird eine elektronische Anzeige- und/oder Bedienvorrichtung mit einem Display und Zustandsanzeigefeldern offenbart, wobei durch die Verwendung bestimmter Symbole dasselbe Anzeigefeld sowohl den Betriebs- als auch den Außerbetriebszustand unterschiedlicher Arbeitsaggregate anzeigt. Erfindungsgemäß wird der Außerbetriebszustand eines Arbeitsaggregates beispielsweise durch das Symbol eines das Jeweilige Arbeitsaggregat durchstreichenden Striches, der sich über das vorhandene Symbol legt, angezeigt Hingegen wird der Betriebszustand eines Arbeitsaggregates zum Beispiel durch das Einschalten einer dem vorhandenen Symbol zugeordneten Leuchtanzeige kenntlich gemacht. Auf diese Weise werden keine zusätzlichen Symbole zur Anzeige des Betriebs- und Außerbetriebszustandes verwendet, die den auf dem Display zur Verfügung stehenden Platz einschränken würden. Zum Ein- bzw. Ausschalten der Arbeitsaggregate sind verschiedene Tasten auf dem Display angeordnet.

Nachteilig an einer derartigen Anzeigestruktur ist, dass der Fahrer der landwirtschaftlichen Arbeitsmaschine hinsichtlich der dargestellten Informationen ausschließlich auf den Betriebs- oder Außerbetriebszustand der abgebildeten Arbeitsaggregate beschränkt ist Ein zusätzlicher Informationsfluss, wie etwa durch das Hinzutreten weiterer Anzeigefelder, ist nicht möglich.

In der EP 1 031 263 A ist eine Vorrichtung zur Einstellung von Arbeitsparametern zur Steuerung von Arbeitsparametern von landwirtschaftlichen Arbeitsmaschinen offenbart. Die Steuerung umfasst eine Steuer- und Regeleinheit, an der ein Bedienterminal. Sensoren und Aktoren angeschlossen sind, wobei mittels des Bedienterminals die Betriebsparameter der Arbeitsmaschine vom Bediener eingebbar sind. Im Weiteren ist eine Anzeigeeinheit am Bedienterminal angeschlossen. Darstellbar sind dabei verschiedene Betriebsmodi, wie ein normaler Betriebsmodus, ein Einstellbetriebsmodus bei der Erstinbetriebnahme zur Eingabe von Parameter, wie auch ein Notfall-Betriebsmodus, Letztendlich ist jedoch hier die konkrete Art der Darstellung der Parameter auf der Anzeigeeinheit, sowie die Eingabe- und Einstellmöglichkeit im speziellen nicht näher konkretisiert.

Aufgrund der steigenden Komplexität von landwirtschaftlichen Arbeits- oder Erntemaschinen, wie Mähdrescher oder Feldhäcksler, die einen hohen Ausstattungsgrad an Gutbearbeitungseinrichtungen aufweisen und deren Betriebsparameter im Arbeits- bzw. Erntebetrieb an wechselnde Erntebedingungen anzupassen sind, umfassen diese Erntemaschinen Anzeige- und/oder Bedienvorrichtungen, bei denen auf der Anzeigefläche sämtliche Betriebsparameter oder sonstige Maschineninformationen visualisierbar und durch Eingabemittel änderbar sind. Dabei sind die Betriebsparameter in Funktionsfenster auf der Anzeigefläche hinterlegt Aufgrund der hohen Anzahl der zu überwachenden und einzustellenden Betriebsparameter ist es bekannt, dass über eine zentrale Bedienvorrichtung sämtliche auf der Anzeigefläche dargestellten Parameter aktivierbar und einstellbar sind. Erfahrene Bediener werden in der Regel keine Probleme damit haben, sämtliche Arbeitsparameter und sonstigen Maschineninformationen abzulesen und über die zentrale Bedienvorrichtung, wenn erforderlich, anzupassen. Dabei kommt es vor allem im Erntebetrieb von landwirtschaftlichen Erntemaschinen dazu, dass bestimmte Betriebsparameter, aufgrund wechselnder Erntebedingungen mehrfach vom Bediener anzupassen sind. Dabei sind wenig bzw. unerfahrene Bediener aufgrund der in hoher Anzahl vorliegenden Darstellung von Betriebsparametern auf der Anzeigefläche oftmals überfordert und müssen dann mittels der zentralen Bedienvorrichtung wiederkehrend zeitintensiv nach den in den Funktionsfenstern hinterlegten Betriebsparametern suchen, um die gewünschten Anpassungen der Betriebsparameter vornehmen zu können, wodurch der Bediener vom eigentlichen Steuern der Erntemaschine abgelenkt wird bzw. notwendige Anpassungen zu spät oder gar nicht erfolgen und somit der Ernteerfolg schlechter ausfällt.

Es ist daher Aufgabe der zugrundeliegenden Erfindung, eine Anzeigeeinheit mit zugeordneten Eingabemitteln zu schaffen, welche die Nachteile im Stand der Technik vermeidet und insbesondere im Arbeitsbetrieb eine bedienerfreundliche Nutzung zulässt.

Diese Aufgabe wird erfindungsgemäß durch das kennzeichnende Merkmal des Patentanspruchs 1 gelöst, wobei in den weiteren Patentansprüchen Merkmale aufgeführt sind, die diese Lösung in vorteilhafter Weise weiterentwickeln.

Indem zumindest im Arbeitsbetrieb auf der Anzeigeeinheit wenigstens eine die Basisanzeigefläche Überlagernde wenigstens ein Funktionsfenster aufweisende Zusatzanzeigefläche anzeigbar ist, wobei die wenigstens eine Zusatzanzeigefläche und das wenigstens eine Funktionsfenster mittels wenigstens einer separaten Bedienvorrichtung aktivierbar und ansteuerbar sind, ist sichergestellt, dass der Bediener zumindest im Arbeitsbetrieb auf den im Funktionsfenster der Zusatzanzeigefläche angelegten Maschinen- und/oder Erntegutparametern schnell zugreifen und falls notwendig, Anpassungen vornehmen kann, ohne zeitintensiv danach in z,T. in Untermenüs liegende Funktionsfenster suchen zu müssen, Vorzugsweise sind dabei die in den Funktionsfenster der Zusatzanzeige- bzw. Basisanzeigefläche angelegten Maschinen- und/oder Erntegutparameter vom Bediener frei definierbar, so dass insbesondere der unerfahrene Bediener die Belegung der Funktionsfenster mit solchen Maschinen- und/oder Erntegutparameter vornehmen kann, die im Erntebetrieb häufig aufgrund sich verändernder Erntebedingungen anzupassen sind. Aufgrund der separaten Bedienvorrichtung kann der Bediener dann vorteilhaft auf die Maschinen- und/oder Erntgutparameter zugreifen.

Als besonders vorteilhaft erweist sich die Erfindung, wenn die Darstellung der Basisanzeigefläche und die der Zusatzanzeigefläche als Fenster in Fenster Format erfolgt, wobei vorzugsweise das Format der Zusatzanzeigefläche ein Kreisformat ist, so dass aufgrund der vorgesehenen separaten Ansteuerung der Basis- bzw. der Zusatzanzeigefläche über jeweils separate Bedienvorrichtungen für den Bediener eine sehr schnelle Ansteuerung und Einstellung der jeweils in den Funktionsfenster hinterlegten Maschinen- und/oder Erntegutparameter erreichbar ist, Vorzugsweise erfolgt dabei die visuelle Darstellung der Basisanzeigefläche als dominant gegenüber der Zusatzanzeigefläche, so dass die Basisanzeigeflache als solche für den Bediener permanent erkennbar ist.

Indem die Positionierung der Zusatzanzeigefläche auf der Anzeigeeinheit in Abhängigkeit vom zuletzt auf der Basisanzeigefläche angesteuerten Funktionsfenster erfolgt, wobei das zuletzt auf der Basisanzeigefläche angesteuerte Funktionsfenster nicht von der eingeblendeten Zusatzanzeigefläche überlagert wird, ist sichergestellt, dass der Bediener jeweils das letzte auf der Basisanzeigefläche angesteuerte Funktionsfenster im Blickfeld behält, selbst wenn die Zusatzanzeigefläche aktiviert ist

Im einfachsten Fall erfolgt das Ausblenden der Zusatzanzeigefläche nach einer vorab definierten Zeitspanne selbsttätig, so dass grundsätzlich die Basisanzeigefläche mit den dort angeordneten Funktionsfenstern für den Bediener sichtbar ist und dieser damit die Basisinformationen im Blickfeld behält.

Eine vorteilhafte Ausführung der Erfindung ergibt sich, wenn das wenigstens eine Funktionsfenster der Zusatzanzeigefläche bei Unterschreiten eines dem jeweiligen Funktionsfenster zugeordneten und festegelegten Schwellwertes selbsttätig öffnet, wobei die Schwellwerte vorzugsweise maschinenspezifische oder erntegutspezifische Werte umfassen, so dass der Fahrer dann über kritische Zustände sofort informiert ist und geeignete Maßnahmen ergreifen kann.

Dadurch, dass die in den Funktionsfenster anlegten Maschinen- und/oder Erntegutparameter frei definierbar sind, ist sichergestellt, dass eine an die Arbeits- bzw. Erntebedingungen angepasste und eine die Präferenzen des jeweiligen Bedieners berücksichtigende Benutzung möglich ist. Damit ist ein auf den jeweiligen Bediener abgestimmter Informationsfluss erreichbar ist.

Als besonders praxistauglich erweist sich die Erfindung, wenn die Bedienvorrichtungen zur Aktivierung der Basisanzeigefläche bzw. der Zusatzanzeigefläche und der Ansteuerung der darin angeordneten Funktionsfenster als Dreh- und/oder Drückschalter ausgeführt sind.

Weitere vorteilhafte Ausgestaltungen sind Gegenstand weiterer Unteransprüche und werden nachfolgend anhand von Zeichnungen näher erläutert.

Es zeigen:
- Figur 1:: einen schematischen Querschnitt durch eine als Feldhäcksler ausgeführte landwirtschaftliche Arbeitsmaschine und deren Arbeitsaggregate
- Figur 2:: einen Terminal mit einer in einer Anzeigeeinheit dargestellten Funktionsfenster aufweisende Basisanzeigefläche
- Figur 3: einen Terminal mit einer in einer Anzeigeeinheit dargestellten Basisanzeigefläche und einer dargestellten Zusatzanzeigefläche

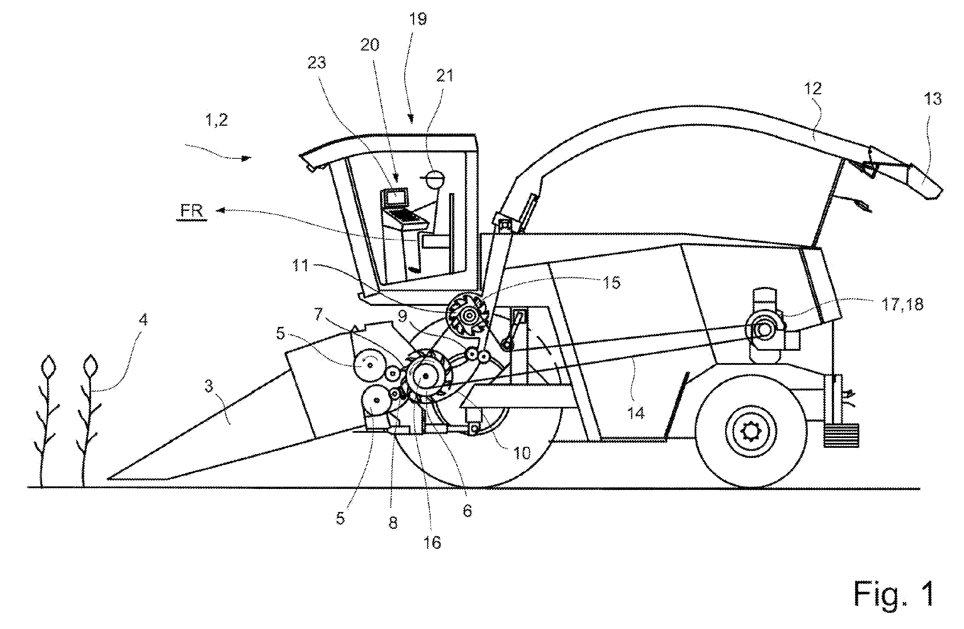

Figur 1 zeigt eine als selbstfahrender Feldhäcksler 1 ausgeführte landwirtschaftliche Erntemaschine 2 in Seitenansicht und Schnittdarstellung mit unterschiedlichen im Weiteren noch näher dargestellten Arbeitsaggregaten. Frontseitig in Fahrtrichtung FR gesehen ist dem Feldhäcksler 1 ein Vorsatzgerät 3 zugeordnet, welches im Arbeitsbetrieb des Feldhäckslers 1 das Erntegut 4 aufnimmt, gegebenenfalls zerkleinert und den nachfolgenden Einzugs- und Vorpresswalzen 5 zuführt. Die Einzugs- und Vorpresswalzen 5 leiten das Erntegut 4 der nachgeordneten und rotierenden Häckseltrommel 6 zu, deren umlaufenden Häckselmesser 7 das Erntegut 4 an einer Gegenschneide 8 zerkleinern. Das zerkleinerte Erntegut 4 wird sodann an eine Nachzerkleinerungseinrichtung 9 übergeben, die die Erntegutkörner, wie beispielsweise Mais, anschlägt und über einen Förderschacht 10 an einen Nachbeschleuniger 11 übergibt, Der Nachbeschleuniger 11 beschleunigt das zerkleinerte Erntegut 4 und fördert es über einen horizontal und vertikal verstellbaren Auswurfkrümmer 12 und eine diesem verschwenkbar zugeordnete Auswurfkrümmerklappe 13 zur Regelung der Wurfweite des Erntegutstrahls auf eine nicht abgebildete, dem Auswurfkrümmer 12 zugeordnete Transportvorrichtung,

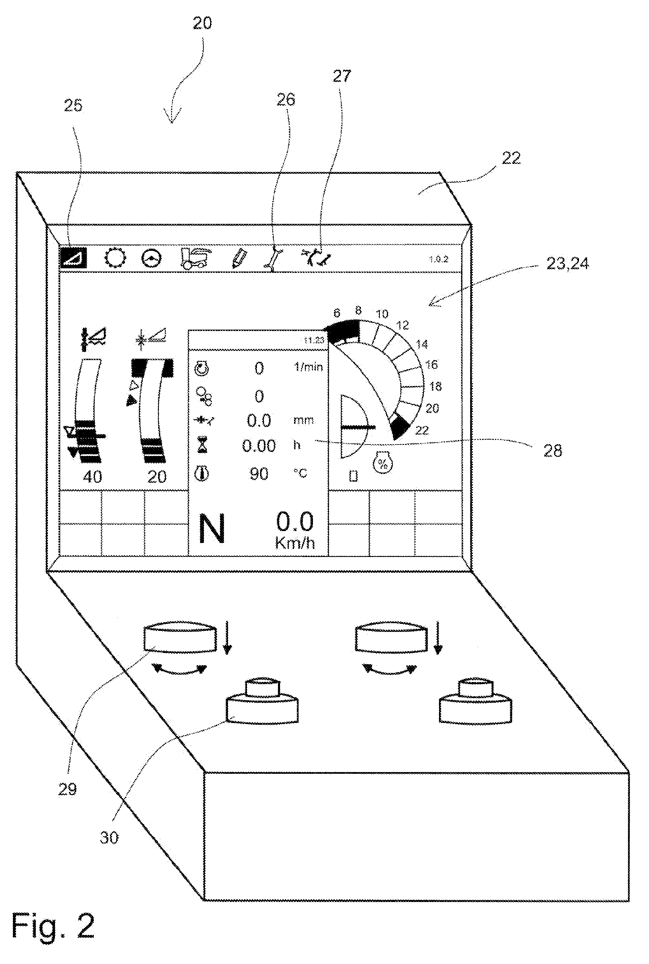

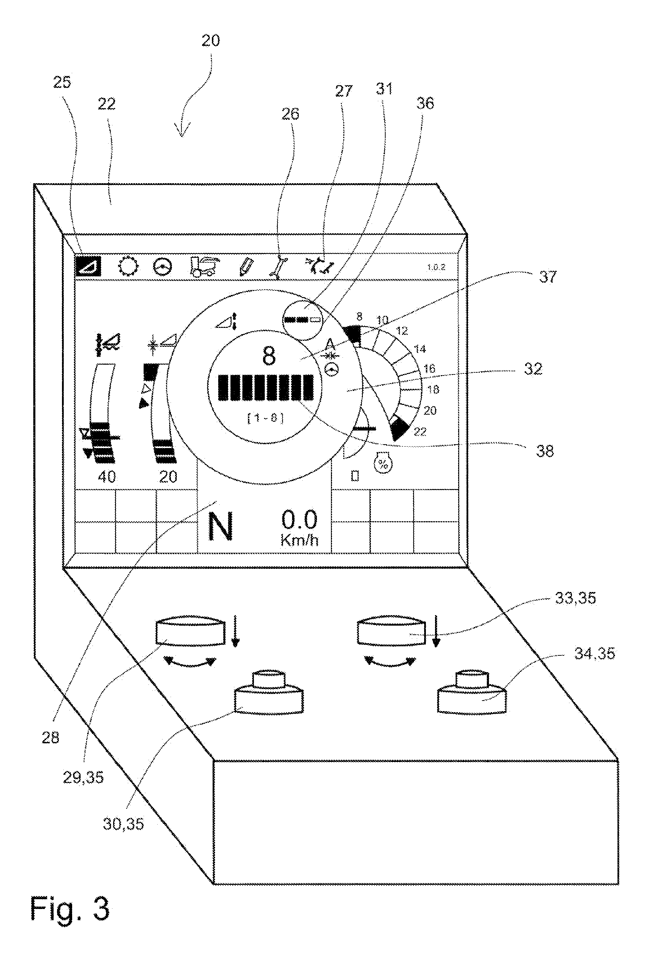

Die Häckseltrommel 6 und der Nachbeschleuniger 11 sind über einen gemeinsamen Antriebsriemen 14 und diesem zugeordnete Riemenscheiben 15, 16 mit einer als Dieselmotor 17 ausgeführten Antriebseinheit 18 verbunden. Über ein in der Fahrerkabine 19 angeordnetes in Fig. 2 und Fig. 3 näher dargestelltes Terminal 20 kann der Bediener 21 die Einstellungen von Maschinen- und Erntegutparametern, wie beispielsweise die Höheneinstellung des Vorsatzgerätes 3, Schnittlänge des Erntegutes 4 oder die Einstellung der Teilbreite des Vorsatzgerätes 3 vornehmen. Das Terminal weist ein Gehäuse 22 auf, in dem eine Anzeigeeinheit 23 vorhanden ist. Im Weiteren sind unterhalb und der Anzeigeeinheit 23 vorgelagert in Fig. 2 und Fig. 3 noch näher dargestellte Bedienvorrichtungen angeordnet, mit denen die Ansteuerung und Einstellung der Maschinen- und/oder Erntegutparameter auf der Anzeigeeinheit 23 erfolgt.

In Fig. 2 ist das Terminal 20 in vergrößerter Darstellung abgebildet. Die Anzeigeeinheit 23 zeigt beispielhaft den Erntebetriebsmodus eines sich im Erntebetrieb befindenden Feldhäckslers 1. Die Anzeigeeinheit 23 wird von einer Basisanzeigefläche 24 voll ausgefüllt, Dabei sind im oberen Bereich der Basisanzeigefläche 24 verschiedene mit Maschinen- und/oder Erntegutparametern hinterlegte Funktionsfenster 25,26,27 angezeigt. Diese müssen nicht gleichzeitig auf der Basisanzeigefläche 24 dargestellt werden, sondern können über Menüs und Untermenüs abrufbar sein, in denen sinnvoll zusammenfassbare Maschinen- und/oder Erntegutparameter zusammengefasst sein können, Die Belegung der einzelnen Funktionsfenster 25,26,27 mit Maschinen- und/oder Erntegutparameter ist vom Bediener 21 frei wählbar, Die im Ausführungsbeispiel in der Basisanzeigefläche 24 dargestellten Funktionsfenster 25,26,27 sind nicht abschließend und erweiterbar und zeigen ertitebetriebsspezifische Maschinen- und/oder Erntegutparameter des sich im Erntebetrieb befindenden Feldhäckslers 1. Befindet sich dagegen die landwirtschaftliche Arbeits- bzw. Erntemaschine 2 im Straßenbetrieb ist es denkbar, dass auf der Anzeigeeinheit 23 ein Straßenbetriebsmodus darstellbar ist und in den Funktionsfenster 25,26,27 der Basisanzeigefläche 24 straßenbetriebsspezifische Parameter der Arbeits- bzw, der Erntemaschine hinterlegt sind. Die Ansteuerung und Einstellung der in den Funktionsfenster 25,26,27 der Basisanzeigefläche 24 hinterlegten Maschinen- und/oder Erntegutparameter erfolgt im Beispiel über die linksseitig auf dem Gehäuse 22 des Terminals 20 angeordneten Bedienvorrichtungen 29,30.

Durch das Anwählen eines Funktionsfensters 25 erfolgt eine andersfarbige Darstellung des Hintergrundes sowie eine separate Visualisierung in einem vergrößerten hier jedoch nicht näher dargestellten Funktionsfenster. In diesem Futiktionsfenster sind dann sämtliche Informationen bzw. Funktionen der im Funktionsfenster 25 hinterlegten Maschinen- und/oder Erntegutparameter, hier beispielhaft die Arbeitsstellung des Vorsatzgerätes 3 detailliert und in vergrößerter Darstellung visualisiert, Im Weiteren können durch die Aktivierung des Funktionsfensters 26 die Wartungsintervalle des Feldhäcksler 1 abgelesen werden. Im Funktionsfenster 27 sind die Schleifintervalle und die Einstellung der Gegenschneide 8 zur Häckseltrommel 6 hinterlegt. Zentral auf der Basisanzeigefläche 24 angeordnet, zeigt ein rechteckig und gegenüber den Funktionsfenstern 26,26,27 vergrößert angezeigtes Funktionsfenster 28 permanent speziell für den Erntebetrieb wichtige und vom Bediener 21 ständig zu überwachende Maschinen- und/oder Erntegutparameter. Angezeigt sind die Uhrzeit, die Motordrehzahl, die Spaltbreite des Nachbeschleunigers 11, die Einstellung der Gegenschneide 8 zur Häckseltrommel 6, die Betriebsstundenzahl, die Motoröltemperatur, sowie die Fahrgeschwindigkeit mittels verschiedener hier nicht näher beschriebener Symbole. Auf der rechten Seite der Basisanzeigefläche 24 sind fest vorgegebene Parameter gezeigt, im Beispiel die Motordrehzahl und die Motorauslastung, die mit anderen Mitteln als mit den Bedienvorrichtungen 29,30 veränderbar sind, In der linken Hälfte der Basisanzeigefläche 24 sind der Hubzylinderdruck und die aktuelle Vorsatzhöhe des Vorsatzgerätes 3 angezeigt. Im unteren Bereich der Basisanzeigefläche 24 rechts und links vom mittig angezeigten Funktionsfenster 28 sind noch nicht belegte Funktionsfenster angezeigt. Die hier erfolgte Aufzählung ist nicht abschließend, sondern änder- und erweiterbar.

Aufgrund der in hoher Anzahl vorliegenden Darstellung von Maschinen- und/oder Erntegutparametern auf der Anzeigeeinheit 23 musste der Bediener 21 aufgrund der zentralen Bedienstruktur für sämtlicher Maschinen- und/oder Erntegutparameter u.U. zeitintensiv nach den jeweiligen die Maschinen- und/oder Erntegutparameter beinhaltenden Funktionsfenster 25,26,27 suchen, die teilweise in Untermenüs angeordnet sind, um vor allem im Erntebetrieb an gleichen Maschinen- und/oder Erntegutparameter aufgrund sich verändernder Erntegutbedingungen, wiederholend Anpassungen vornehmen zu können, welches ein Ablenken vom eigentlichen Steuern der landwirtschaftlichen Arbeits- bzw. Erntemaschine bedeutet.

Wie nun in Fig. 3 dargestellt ist, ist erfindungsgemäß zumindest im Arbeits- bzw. Erntebetrieb auf der Anzeigeeinheit 23 wenigstens eine die Basisanzeigefläche 24 überlagernde wenigstens ein Funktionsfenster 31 aufweisende Zusatzanzeigefläche 32 anzeigbar, wobei die Aktivierung der Zusatzanzeigefläche 31 und die AnSteuerung der in dem wenigstens einen Funktionsfenster 31 hinterlegten Maschinen- und/oder Erntegutparameter mittels separater, rechtsseitig auf dem Gehäuse 22 des Terminals 20 angeordneter Bedienvorrichtungen 33,34 erfolgt. Vorzugsweise befinden sich diese Bedienvorrichtungen 33,34 in unmittelbarer Nähe zu den Bedienvorrichtungen 29,30 der Basisanzeigefläche 24, so dass ein Wechsel der Bedienvorrichtungen 29,30,33,34 vom Bediener 21 einfach und bequem vollzogen werden kann. Dabei sind die in den Funktionsfenster 25,26,27 der Basisanzeigefläche 24 und in den der Zusatzanzeigfläche 32 angelegten Maschinen- oder Erntegutparameter vom Bediener 21 frei definierbar. Dadurch wird es dem Bediener 21 ermöglicht, Maschinen- und/oder Erntegutparameter die insbesondere im Arbeits- bzw. Erntebetrieb aufgrund wechselnder Erntebedingungen mehrfach anzupassen sind, in Funktionsfenster 31 der Zusatzanzeigefläche 32 anzulegen, um über die separaten Bedienvorrichtungen 33,34 schnell darauf zugreifen und Einstellungen vornehmen zu können. Vorzugsweise sind dabei die separaten, zur Bedienung der Zusatzanzeigefläche 32 vorgesehenen Bedienvorrichtungen 29,30, wie auch die für die Basisanzeigefläche 26 vorgesehenen Bedienvorrichtungen 29,30 als Dreh- und/oder Drückschalter 35 ausgeführt, die dem Bediener 21 der landwirtschaftlichen Erntemaschine 2 eine komfortable und einfache Bedienung ermöglicht, wobei der Bediener 21 mittels Verdrehen und/oder Drücken des jeweiligen Dreh- und/oder Drückschalters 35 die einzelnen Funktionsfenster 25,26,27,31 anwählen und Einstellungen an den in den Funktionsfenster 25,26,27,31 angelegten Maschinen- und/oder Erntgutparameter vornehmen kann. Weitere Ausführungsformen der Bedienvorrichtungen 29,30,33,34 wie beispielsweise Tastschalter oder Touchscreen-Schalter, sind denkbar.

Wie weiter in Fig. 3 dargestellt, erfolgt vorteilhaft die Darstellung der die Basisanzeigfläche 24 überlagernde Zusatzanzeigefläche 32 als Fenster in Fenster Format, wobei vorzugsweise, das Format der Zusatzanzeigefläche 32 ein Kreisformat ist, dessen Größe sowie dessen Lage auf der Basisanzeigefläche 24 frei vom Bediener 21 wählbar ist. Das Kreisformat der Zusatzanzeigefläche 32 schafft dabei vorteilhaft eine visuell klar erkennbare Abgrenzung zur rechteckig ausgeführten Basisanzeigefläche 26. Denkbar ist zudem, andere Formate für die Darstellung der Zusatzanzeigefläche 32 zu wählen. Die Basisanzeigefläche 24 verbleibt dabei visuell dominant gegenüber der Zusatzanzeigefläche 32, um diese als solche für den Bediener 21 erkennen zu lassen,

Als Beispiel für ein einstellbaren Maschinen- und/oder Erntegutparameter ist im Funktionsfenster 31 in der Zusatzanzeigefläche 32 die Einstellung der Teilbreite des Vorsatzgerätes 3 hinterlegt Die Aktivierung des Funktionsfensters 31 ist an der als Kreis ausgeführten Umrahmung 36 des Funktionsfensters 31 erkennbar. Andere visuelle Hervorhebungen, wie eine andersfarbige Darstellung des Hintergrundes sind denkbar. Mit der Aktivierung des Funktionsfensters 31 erfolgt eine Darstellung in einem vergrößerten innerhalb der Zusatzanzeigefläche 32 liegenden Funktionsfenster 37, in Fig. 3 als Kreisformat ausgeführt. Die Einstellung der Teilbreite des Vorsatzgerätes 3 dient zur Festlegung der realen Arbeitsbreite des Vorsatzgerätes 3 innerhalb welcher mittels des Vorsatzgerätes 3 Erntegut 4 im Erntebetrieb aufgenommen wird, um eine genaue Ertragsberechnung erreichen zu können, Im Beispiel ist die Arbeitsbreite des Vorsatzgerätes 3 in Teilbreiten zwischen einem numerischen Wert von 1 bis 8 einstellbar, weicher zudem graphisch mittels eines horizontal ausgeführten Balkendiagramms 38 dargestellt ist. Das Einblenden der Zusatzanzeigefläche 32, das Ansteuern des Funktionsfensters 31, sowie die Einstellung der Teilbreite des Vorsatzgerätes 3 erfolgt über die separaten nur zur Bedienung der Zusatzanzeigefläche 32 vorgesehenen als Dreh- und/oder Druckschalter 35 ausgeführten Bedienvorrichtungen 33,34 so dass der Bediener 21 im Erntebetrieb schnell darauf zugreifen kann und an sich verändernde Erntebedingungen, die Einstellung der Teilbreite des Vorsatzgerätes 3 anpassen kann.

Damit der Bediener 21 des Feldhäckslers 1 die in sämtlichen Funktionsfenstern 25,26,27, 31 visualisierten Informationen problemlos und leserlich erkennen kann, wird die Minimalgröße eines Funktionsfensters 25,26,27,31 jedoch begrenzt sein. In vorteilhafter Weiterbildung der Erfindung kann dabei die Größenwahl der Zusatzanzeigefläche 32 bzw. der Funktionsfenster 25,26,27,31,37 dynamisch erfolgen, so dass stets die geeignetste und größte Darstellung ausgewählt wird. Darüber hinaus ist vorgesehen, dass die Positionierung der Zusatzanzeigefläche 32 auf der Anzeigeeinheit 23 in Abhängigkeit vom zuletzt auf der Basisanzeigefläche 24 angesteuerten Funktionsfenster 25,26,27, erfolgt, wobei dann das zuletzt auf der Basisanzeigefläche 24 angesteuerte Funktionsfenster 25,26,27 nicht von der eingeblendeten Zusatzanzeigefläche 32 überlagert wird, so dass der Bediener 21 die zuletzt auf der Basisanzeigefläche 24 vorgenommene Maschinen- und/oder Emtegutparametereinstellung im Blickfeld behält.

Die Einblendung der Zusatzanzeigefläche 32 auf der Anzeigeeinheit 23 erfolgt dann, wenn wenigstens eine zur Bedienung der Zusatzanzeigefläche 32 bestimmten Bedienvorrichtung 33, 34 hier als Dreh- und Druckschalter 35 ausgebildet, betätigt wird. Vorzugsweise wird die Zusatzanzeigefläche 32 auf der Anzeigeeinheit 23 dann ausgeblendet, wenn wenigstens eine zur Bedienung der Basisanzeigefläche 24 bestimmten Bedienvorrichtung 29 betätigt wird. Damit der Bediener 21 grundsätzlich die auf der Basisanzeigefläche 26 angezeigten Informationen im Blickfeld behält, ist in vorteilhafter Weiterbildung der Erfindung vorgesehen, dass die Ausblendung der Zusatzanzeigefläche 32 nach Ablauf einer frei definierbaren Zeitspanne selbsttätig erfolgt Denkbar ist auch, dass das Aussenden der Zusatzanzeigefläche 32 manuell durch den Bediener 21 der landwirtschaftlichen Erntemaschine 2 erfolgt.

Ferner ist vorgesehen, dass wenn ein im jeweiligen Funktionsfenster 25,26,27,31,37 hinterlegter Maschinen- und/oder Erntegutparameter einen Schwellwert übersteigt bzw. unterschreitet, dass die dieses Funktionsfenster 25,26,27,28,31,37 beinhaltende Anzeigefläche 24, 32 im Vordergrund liegend auf der Anzeigeeinheit 22 eingeblendet wird, wobei gleichzeitig das jeweilige den Schwellwert visualisierende Funktionsfenster 25,26,27,31,37 in vergrößerter Darstellung gezeigt wird, so dass der Bediener 21 sofort informiert ist und mögliche Gegenmaßnahmen einleiten kann. Beispielhaft kann ein Schwellwert der kritische Arbeitszustand der in Fig. 1 dargestellten Antriebseinheit 18 der landwirtschaftlichen Erntemaschine 2 sein. Wird die Antriebseinheit 18 dauerhaft stark belastet und steht eine Überlastung unmittelbar bevor, wird dies dem Bediener 21 der landwirtschaftlichen Erntemaschine 2 in einem entsprechenden, hier nicht näher dargestellten Funktionsfenster deutlich zur Anzeige gebracht, so dass er regulierend eingreifen kann, ohne dass es zu einem vollständigen Stillstand der landwirtschaftlichen Erntemaschine 2 kommt.

Es obliegt dem Können eines Fachmanns das beschriebene Ausführungsbeispiel in nicht dargestellter Weise abzuwandeln oder in anderen landwirtschaftlichen Arbeits- oder Erntemaschinen 2, wie beispielsweise Mähdrescher, Traktoren, einzusetzen, um die beschriebenen Effekte zu erzielen, ohne dabei den Rahmen der Erfindung zu verlassen.

### Bezugszeichenliste:

- 1: selbstfahrender Feldhäcksler
- 2: landwirtschaftliche Arbeits- oder Erntemaschine
- 3: Arbeitsaggregat, Vorsatzgerät
- 4: Erntegut
- 5: Einzugs- und Vorpresswalzen
- 6: Häckseltrommel
- 7: Häckselmesser
- 8: Gegenschneide
- 9: Nachzerkleinerungseinrichtung
- 10: Förderschacht
- 11: Nachbeschleuniger
- 12: Auswurfkrümmer
- 13: Auswurfkrümmerklappe
- 14: Antriebsriemen
- 15: Riemenscheibe
- 16: Riemenscheibe
- 17: Dieselmotor
- 18: Antriebseinheit
- 19: Fahrerkabine
- 20: Terminal
- 21: Bediener
- 22: Gehäuse
- 23: Anzeigeeinheit
- 24: Basisanzeigefläche
- 25: Funktionsfenster
- 26: Funktionsfenster
- 27: Funktionsfenster
- 28: Funktionsfenster
- 29: Bedienvorrichtung
- 30: Bedienvorrichtung
- 31: Funktionsfenster

- 32: Zusatzanzeigefläche
- 33: Bedienvorrichtung
- 34: Bedienvorrichtung
- 35: Dreh- und/oder Drückschalter
- 36: Umrahmung
- 37: Funktionsfenster
- 38: Balkendiagramm

- FR: Fahrtrichtung

## Patentansprüche

1. Landwirtschaftliche Arbeits- oder Erntemaschine mit wenigstens einem Arbeitsaggregat und einer Fahrerkabine, in der über einer in zumindest einer Anzeigeeinheit dargestellten elektronischen Basisanzeigefläche, mehrere in unterschiedlichen Funktionsfenstern angelegte Maschinen- und/oder Emtegutparameter visualisiert werden und wobei die Aktivierung und Ansteuerung der Basisanzeigefläche mittels einer Bedienvorrichtung erfolgt,
**dadurch gekennzeichnet,**
**dass** zumindest im Arbeits- bzw. Erntebetrieb auf der Anzeigeeinheit (23) wenigstens eine die Basisanzeigefläche (24) überlagernde, wenigstens ein Funktionsfenster (31) aufweisende Zusatzanzeigefläche (32) anzeigbar ist, wobei das Aktivieren und das Ansteuern der Zusatzanzeigefläche (32) und des wenigstens einen Funktionsfensters (31) mittels wenigstens einer separaten Bedienvorrichtung (33,34) erfolgt

2. Landwirtschaftliche Arbeits- oder Erntemaschine nach Anspruch 1,
**dadurch gekennzeichnet,**
**dass** die Darstellung der Basisanzeigefläche (24) und die der Zusatzanzeigefläche (32) auf der Anzeigeeinheit (23) als Fenster in Fenster Format erfolgt, wobei vorzugsweise das Format der Zusatzanzeigefläche (32) ein Kreisformat ist

3. Landwirtschaftliche Arbeits- oder Erntemaschine nach einem oder mehreren der vorhergehenden Ansprüche,
**dadurch gekennzeichnet,**
**dass** die Größe der wenigstens ein Funktionsfenster (31) aufweisenden Zusatzanzeigefläche (32) frei wählbar ist.

4. Landwirtschaftliche Arbeits- oder Erntemaschine nach einem oder mehreren der vorhergehenden Ansprüche,
**dadurch gekennzeichnet,**
**dass** die Basisanzeigefläche (24) auf der Anzeigeeinheit (23) visuell dominant gegenüber der Zusatzanzeigefläche (32) ist.

5. Landwirtschaftliche Arbeits- oder Erntemaschine nach einem oder mehreren der vorhergehenden Ansprüche,
**dadurch gekennzeichnet,**
**dass** die Positionierung der Zusatzanzeigefläche (32) auf der Anzeigeneinheit (23) in Abhängigkeit vom zuletzt auf der Basisanzeigefläche (24) angesteuerten Funktionsfenster (25,26,27) erfolgt, wobei das zuletzt auf der Basisanzeigefläche (24) angesteuerte Funktionsfenster (25,26,27) nicht von der eingeblendeten Zusatzanzeigefläche (32) überlagert wird.

6. Landwirtschaftliche Arbeits- oder Erntemaschine nach einem oder mehreren der vorhergehenden Ansprüche,
**dadurch gekennzeichnet,**
**dass** die Zusatzanzeigefläche (32) auf der Anzeigeeinheit (23) eingeblendet wird, wenn wenigstens eine zur Bedienung der Zusatzanzeigefläche (32) bestimmte Bedienvorrichtung (33,34) betätigt wird.

7. Landwirtschaftliche Arbeits- oder Erntemaschine nach einem oder mehreren der vorhergehenden Ansprüche,
**dadurch gekennzeichnet,**
**dass** die Zusatzanzeigefläche (32) ausgeblendet wird, wenn wenigstens eine zur Bedienung der Basisanzeigefläche (26) bestimmte Bedienvorrichtung (29,30) betätigt wird.

8. Landwirtschaftliche Arbeits- oder Erntemaschine nach einem oder mehreren der vorherigen Ansprüche,
**dadurch gekennzeichnet,**
**dass** die Darstellung der Zusatzanzeigefläche (32) auf der Anzeigeeinheit (23) manuell vom Bediener (21) beendet werden kann.

9. Landwirtschaftliche Arbeits- oder Erntemaschine nach einem oder mehreren der vorhergehenden Ansprüche,
**dadurch gekennzeichnet,**
**dass** sich die Zusatzanzeigefläche (32) nach einer definierbaren Zeitspanne selbsttätig aussendet.

10. Landwirtschaftliche Arbeits- oder Erntemaschine nach einem oder mehreren der vorhergehenden Ansprüche,
**dadurch gekennzeichnet,**
**dass** sich das wenigstens eine Funktionsfenster (31) der Zusatzanzeigfläche (32) bei Unterschreiten eines dem jeweiligen Funktionsfenster (31) zugeordneten und festgelegten Schwellwertes selbsttätig öffnet.

11. Landwirtschaftliche Arbeits- oder Erntemaschine nach einem oder mehreren der vorhergehenden Ansprüche,
**dadurch gekennzeichnet,**
**dass** die Schwellwerte maschinenspezifische oder erntegutspezifische Werte umfassen.

12. Landwirtschaftliche Arbeits- oder Erntemaschine nach einem oder mehreren der vorhergehenden Ansprüche,
**dadurch gekennzeichnet,**
**dass** ein Schwellwert der kritische Arbeitszustand zumindest eines Arbeitsaggregates ist.

13. Landwirtschaftliche Arbeits- oder Erntemaschine nach einem oder mehreren der vorhergehenden Ansprüche,
**dadurch gekennzeichnet,**
**dass** die in den Funktionsfenstern (25,26,27,28,31,37) angelegten Maschinen- und/oder Erntegutparameter frei definierbar sind.

14. Landwirtschaftliche Arbeits- oder Erntemaschine nach einem oder mehreren der vorhergehenden Ansprüche,
**dadurch gekennzeichnet,**
**dass** die Bedienvorrichtungen (29,33) zur Aktivierung der Basisanzeigefläche (24) bzw. der Zusatzanzeigfläche (32) und der darin angeordneten Funktionsfenster (25,26,2728,31,37) als Dreh- und/oder Drückschalter (34) ausgeführt sind.
